(19) **Europäisches Patentamt**
**European Patent Office**
**Office européen des brevets**

(11) **EP 2 944 684 A1**

(12) **EUROPEAN PATENT APPLICATION**
published in accordance with Art. 153(4) EPC

(43) Date of publication:
**18.11.2015 Bulletin 2015/47**

(21) Application number: **14737796.4**

(22) Date of filing: **07.01.2014**

(51) Int Cl.:
**C11B 15/00** (2006.01)   **A23D 9/00** (2006.01)
**A23D 9/02** (2006.01)   **A23G 1/00** (2006.01)
**A23G 1/30** (2006.01)   **C11B 3/12** (2006.01)
**C11B 3/16** (2006.01)   **C11B 7/00** (2006.01)

(86) International application number:
**PCT/JP2014/050072**

(87) International publication number:
**WO 2014/109313 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.01.2013 JP 2013003791**

(71) Applicant: **The Nisshin Oillio Group, Ltd.**
**Chuo-ku**
**Tokyo 104-8285 (JP)**

(72) Inventors:
• **TAKABA Masato**
**Yokosuka-shi**
**Kanagawa 239-0832 (JP)**
• **TAKEGUCHI Seiya**
**Yokosuka-shi**
**Kanagawa 239-0832 (JP)**

(74) Representative: **Bawden, Peter Charles**
**Bawden & Associates**
**4 The Gatehouse**
**2 High Street**
**Harpenden, Hertfordshire AL5 2TH (GB)**

(54) **METHOD FOR PRODUCING OIL OR FAT**

(57)     An object of the present invention is to provide a method for producing a solid fat having a specific iodine value. Specifically, provided is a method for producing a solid fat comprising the steps of: (1) mixing and melting under heating a lauric fat and a fatty acid having 14 to 22 carbon atoms, where the amount of the fatty acid is 0.5 to 15% by mass relative to the total mass of the lauric fat and the fatty acid; (2) cooling a hot melt obtained by the melting under heating to obtain a crystallization product; (3) fractionating the crystallization product into a solid fraction and a liquid fraction by solid-liquid separation; and (4) removing the fatty acid from the solid fraction to obtain the solid fat.

EP 2 944 684 A1

**Description**

Technical Field

The present invention relates to a method for producing, by fractionation, a solid fat having a low iodine value from a lauric fat, and particularly relates to a method for producing, by fractionation, a solid fat which is excellent as a cocoa butter substitute (CBS). The present invention also relates to a method for fractionating a lauric fat into a solid fat having a low iodine value and a liquid oil having a high iodine value.

Background Art

Hard butters including cacao butter have been widely used for confectionery production mainly including chocolate making, food manufacturing such as bread making, as well as for pharmaceuticals, cosmetics, and the like. Known hard butters include tempering-type hard butters mainly containing a symmetrical triglyceride (SUS, each S represents a saturated fatty acid, and U represents an unsaturated fatty acid) having one unsaturated bond in its molecule, lauric hard butters which are non-tempering type hard butters and which mainly contain SSS-type triglycerides composed of only saturated fatty acids, and the like.

In general, the lauric hard butters can be obtained by fractionating a naturally occurring fat containing the above-described triglyceride component and having a high lauric acid content, for example, a lauric fat such as palm kernel oil or coconut oil, followed by hydrogenation. Especially, a solid fat which is obtained by fractionation of a lauric fat and which mainly contains an SSS-type triglyceride having an iodine value of about 5 can be used as a cocoa butter substitute even without hydrogenation, and is expected to be demanded in the countries and regions where chemical modifications such as hydrogenation are avoided (Non Patent Literature 1). As a method for fractionating a fat, a method has been generally employed in which the fat is melted under heating, cooled by being allowed to stand still, solidified and crystallized, and then the solidified material is pressed (Patent Literature 1). In this method which is generally conducted by dry fractionation, a considerable amount of the liquid fraction is trapped in the solid fraction, and hence the fractionation efficiency is low. It is reported that, for this reason, the yield of the product has to be sacrificed by 10% or more to obtain the solid fat mainly containing an SSS-type triglyceride having an iodine value of about 5 (Non Patent Literature 1). A method has also been studied in which palm kernel oil, which is a lauric fat, is crystallized in the presence of a modifying substance such as sucrose polyester (Patent Literature 2). However, this method is disadvantageous in that it is difficult to remove the additive. As described above, particularly, a method for efficiently producing by fractionation a solid fat mainly containing an SSS-type triglyceride having an iodine value of about 5 has not been established yet.

Citation List

Patent Literatures

Patent Literature 1: Japanese Patent Application Publication No. Hei 11-80776
Patent Literature 2: International Application Japanese-Phase Publication No. Hei 11-502893

Non Patent Literature

Non Patent Literature 1: G. Calliauw et al, "Production of Cocoa Butter Substitutes via Two-stage Static Fractionation of Palm kernel Oil", JAOCS, Vol. 82, No. 11 (2005), pp 783 to 789

Summary of Invention

An object of the present invention is to provide a more efficient and industrially suitable method for producing, by fractionation, a solid fat having a lower iodine value than a lauric fat used as a raw material.
Another object of the present invention is to provide a method for producing a solid fat mainly containing an SSS-type triglyceride.
The present invention also relates to a method for fractionating a lauric fat serving as a raw material into a solid fat having a low iodine value and a liquid oil having a high iodine value.
Still another object of the present invention is to provide an industrially suitable method for producing a hard butter having excellent characteristics especially as a cocoa butter substitute.

Solution to Problems

The present invention has been made on the basis of the following finding. Specifically, the above-described objects can be achieved in such a manner that a mixture of a lauric fathaving a high lauric acid content and a specific amount of a fatty acid having 14 to 22 carbon atoms is prepared and melted under heating, followed by cooling, crystallization, and refinement.

Specifically, preferred modes of the present invention are as follows.

[1] A method for producing a solid fat, comprising the steps of:

(1) mixing and melting under heating a lauric fat and a fatty acid having 14 to 22 carbon atoms, wherein the amount of the fatty acid is 0.5 to 15% by mass relative to the total mass of the lauric fat and the fatty acid;
(2) cooling a hot melt obtained by the melting under heating to obtain a crystallization product;
(3) fractionating the crystallization product into a solid fraction and a liquid fraction by solid-liquid separation; and
(4) removing the fatty acid from the solid fraction to obtain the solid fat.

[2] The production method according to [1], wherein
the lauric fat is one or two or more selected from the group consisting of, refined or unrefined, palm kernel oil, palm kernel olein, palm kernel stearin, and coconut oil; interesterified oils thereof; and mixture oils containing one or more thereof.
[3] The production method according to [1] or [2], wherein
the lauric fat has an iodine value of 12 or higher.
[4] The production method according to any one of [1] to [3], wherein
the fatty acid is a saturated fatty acid selected from myristic acid, palmitic acid, stearic acid, arachidic acid, and behenic acid.
[5] The production method according to any one of [1] to [4], wherein
the solid fat has an iodine value which is lower by 11 or more than the iodine value of the lauric fat.
[6] The production method according to any one of [1] to [5], wherein
the solid-liquid separation in step (3) is conducted by pressure filtration.
[7] The production method according to any one of [1] to [6], wherein
the removal of the fatty acid in step (4) is conducted by steam distillation at 150 to 300°C.
[8] A method for fractionating a lauric fat into a solid fat having an iodine value which is lower by 11 or more than the iodine value of the lauric fat and a liquid oil having an iodine value which is higher by 6 or more than the iodine value of the lauric fat, the method comprising the steps of:

(1) mixing and melting under heating the lauric fat and a fatty acid having 14 to 22 carbon atoms, wherein the amount of the fatty acid is 0.5 to 15% by mass relative to the total mass of the lauric fat and the fatty acid;
(2) cooling a hot melt obtained by the melting under heating to obtain a crystallization product;
(3) fractionating the crystallization product into a solid fraction and a liquid fraction by solid-liquid separation; and
(4) removing the fatty acid from the solid fraction to obtain the solid fat, and removing the fatty acid from the liquid fraction to obtain the liquid oil.

Further preferred modes of the present invention are as follows.

[A] A method for producing a solid fat, comprising the steps of:

(1) mixing a lauric fat (especially, palm kernel oil or palm kernel olein) which is one or two or more selected from the group consisting of palm kernel oil, palm kernel olein, palm kernel stearin, and coconut oil; interesterified oils thereof; and mixture oils containing one or more thereof and which has an iodine value of 12 or higher and a saturated fatty acid having 14 to 22 carbon atoms (especially, myristic acid, palmitic acid, stearic acid, arachidic acid, or behenic acid) and melting the mixture under heating at 40°C or above (preferably 50°C or above), wherein the amount of the saturated fatty acid is 0.5 to 15% by mass, preferably 1 to 15% by mass, more preferably 2 to 13% by mass, and further preferably 2.5 to 10% by mass relative to the total mass of the lauric fat and the saturated fatty acid;
(2) cooling a hot melt, which is obtained by the melting under heating, to 30°C or below to obtain a crystallization product;
(3) fractionating the crystallization product into a solid fraction and a liquid fraction by pressure filtration, and
(4) removing the fatty acid from the solid fraction by steam distillation at 150 to 300°C, and preferably 180 to 260°C, wherein
the solid fat has an iodine value which is lower by 11 or more than the iodine value of the lauric fat.

[B] A method for fractionating a lauric fat (especially, palm kernel oil or palm kernel olein) which is one or two or more selected from the group consisting of palm kernel oil, palm kernel olein, palm kernel stearin, and coconut oil; interesterified oils thereof; and mixture oils containing one or more thereof and which has an iodine value of 12 or higher into a solid fat having an iodine value which is lower by 11 or more and preferably 12 or more than the iodine value of the lauric fat and a liquid oil having an iodine value which is higher by 6 or more and preferably 7 or more than the iodine value of the lauric fat, the method comprising the steps of:

(1) mixing the lauric fat and a saturated fatty acid having 14 to 22 carbon atoms (especially, myristic acid, palmitic acid, stearic acid, arachidic acid, or behenic acid) and melting the mixture under heating at 40°C or above (preferably 50°C or above), wherein the amount of the fatty acid is 0.5 to 15% by mass, preferably 1 to 15% by mass, more preferably 2 to 13% by mass, and further preferably 2.5 to 10% by mass relative to the total mass of the lauric fat and the saturated fatty acid;
(2) cooling a hot melt, which is obtained by the melting under heating, to 30°C or below to obtain a crystallization product;
(3) fractionating the crystallization product into a solid fraction and a liquid fraction by pressure filtration; and
(4) removing the fatty acid from the solid fraction by steam distillation at 150 to 300°C, and preferably 180 to 260°C to obtain the solid fat, and removing the fatty acid from the liquid fraction by steam distillation at 150 to 300°C, and preferably 180 to 260°C to obtain the liquid oil.

The present invention makes it possible to stably produce, by fractionation, a solid fat from a lauric fat serving as a raw material in an extremely high yield in comparison with conventional production methods, the solid fat having an iodine value which is lower than the iodine value of the lauric fat, for example, which is lower by 11 or more than that of the lauric fat. In addition, the present invention makes it possible to provide a method for fractionating the lauric fat into a solid fat having a low iodine value, for example, a solid fat having an iodine value which is lower by 11 or more than the iodine value of the lauric fat and a liquid oil having a high iodine value, for example, a liquid oil having an iodine value which is higher by 6 or more than the iodine value of the lauric fat. Moreover, the present invention is advantageous in that also when a refined lauric fat is used as the raw material for the fractionation, the refined lauric fat can be fractionated as in the case of an unrefined oil. Accordingly, the production method of the present invention can be used extremely suitably for producing, by fractionation, a hard butter which is excellent as a cocoa butter substitute (CBS).

Description of Embodiments

The present invention relates to a method for producing a solid fat, the method comprising the steps of:

(1) mixing and melting under heating a lauric fat and a fatty acid having 14 to 22 carbon atoms, wherein the amount of the fatty acid is 0.5 to 15% by mass relative to the total mass of the lauric fat and the fatty acid;
(2) cooling a hot melt obtained by the melting under heating to obtain a crystallization product;
(3) fractionating the crystallization product into a solid fraction and a liquid fraction by solid-liquid separation; and
(4) removing the fatty acid from the solid fraction to obtain the solid fat, wherein
the solid fat has an iodine value which is significantly lower than that of the lauric fat serving as a raw material. Hereinafter, each of the steps is specifically described.

Step (1)

Step (1) is a step of mixing and melting under heating a lauric fat and a fatty acid having 14 to 22 carbon atoms.
Lauric fats usable in the present invention include saturated fatty acids, especially, fats with a high lauric acid content (preferably, the lauric acid content is 20% by mass or higher, and more preferably 30 to 60% by mass). Examples of the lauric fats include palm kernel oil, palm kernel olein, palm kernel stearin, and coconut oil; and processed fats which contain one or more thereof and which are subjected to a treatment such as interesterification, hydrogenation, or fractionation. Here, examples of the processed fats include interesterified oils which contain one or more of palm kernel oil, palm kernel olein, palm kernel stearin, coconut oil, and the like (hereinafter, also referred to as palm kernel oil and the like) described above and also contain a non-lauric fat (for example, palm oil or the like) in which the content of fatty acids having 16 or more, preferably 16 to 24 carbon atoms is 90% by mass or higher relative to the entire fat. Moreover, the lauric fats usable in the present invention may be mixture oils containing a non-lauric fat, in addition to one or more lauric fat components such as palm kernel oil described above. In addition to the lauric fat components such as palm kernel oil, the mixture oils can contain two or more of interesterified oils containing one or more of the palm kernel oil and the like; non-lauric fat components such as palm oil, palm oil fractions, rapeseed oil, soybean oil, and sunflower oil; and interesterified oils of the non-lauric fat components. These lauric fats may be refined or unrefined lauric fats, and are preferably unrefined lauric fats, and particularly preferably unrefined palm kernel oil and palm kernel olein, from the viewpoints of availability and production costs. The iodine value of the lauric fat is, for example, 12 or higher, preferably 13 to 50, more preferably 15 to 30, and further preferably 17 to 25. For example, palm kernel oil generally has an iodine value of 14 to 22, palm kernel olein generally has an iodine value of 22 to 28, and coconut fat generally has an iodine value of 7 to 11. One of the lauric fats or a mixture of two or more thereof can be used in the present invention.

The fatty acid of the present invention is a fatty acid having 14 to 22 and preferably 14 to 18 carbon atoms. The fatty acid usable in the present invention may be a saturated fatty acid or an unsaturated fatty acid, and is preferably a saturated fatty acid. The fatty acid is, for example, a saturated fatty acid selected from myristic acid, palmitic acid, stearic acid, arachidic acid, and behenic acid. The amount of the fatty acid usable in the present invention is, for example, 0.5 to 15% by mass, preferably 1 to 15% by mass, more preferably 2 to 13% by mass, and further preferably 2.5 to 10% by mass, relative to the total mass of the above-described lauric fat and this fatty acid. In the present invention, one of these fatty acids or a mixture of two or more thereof can be used.

In the present invention, the lauric fat and the fatty acid are mixed with each other, and optionally stirred. Then, the lauric fat and the fatty acid are melted by heating to a temperature at which the lauric fat and the fatty acid are melted, for example, to 40°C or above, preferably 50°C or above, more preferably 60 to 100°C for, for example, 0.5 to 3 hours, and preferably 1 to 2 hours. As the heating method, a known heating method can be used, and it is possible to use, for example, a thermostatic chamber, an oil bath, steam heating, heat exchange, and the like at a predetermined temperature.

Step (2)

Step (2) is a step of cooling a hot melt obtained by the melting under heating to obtain a crystallization product.

The hot melt obtained by the melting under heating in Step (1) described above is cooled. The cooling can be conducted, while the hot melt is stirred and/or is allowed to stand still. For the cooling, the hot melt may be cooled to a temperature (hereinafter referred to as "cooling temperature") of 26°C or below, for example, 15 to 25°C, and preferably 18 to 22°C. After the cooling temperature is reached, the melt is preferably not stirred, but allowed to stand still. The cooling time may be any, as long as the sufficient cooling is achieved. It is appropriate to keep the melt at the above-described cooling temperature for, for example, 0.5 to 24 hours, preferably 1 to 12 hours, and more preferably 2 to 6 hours.

By the cooling as described above, a crystallization product can be obtained. The obtained crystallization product is in a state of a so-called cake, which contains both a solid fraction and a liquid fraction.

Step (3)

Step (3) is a step of fractionating the crystallization product into a solid fraction and a liquid fraction by solid-liquid separation.

First, the crystallization product obtained in Step (2) described above is optionally crushed, and subjected to solid-liquid separation into a solid fraction and a liquid fraction. The crushing is preferably conducted by using, for example, a metal screen, a commercially available juicer, a cutter, or the like at, for example, a temperature not higher than room temperature (preferably 20 to 27°C), until the crystallization product becomes flowable. The solid-liquid separation is conducted by pressure filtration or vacuum filtration. The pressure filtration is preferably conducted by using, for example, a filter press used for fractionation filtration of palm oil or the like at a temperature not higher than room temperature (preferably 20 to 27°C) under a pressing pressure of, for example, about 10 to 30 kgf/cm$^2$, preferably 12 to 21 kgf/cm$^2$, and more preferably 14 to 17 kgf/cm$^2$.

Step (4)

Step (4) is a step of removing the fatty acid from the solid fraction obtained in Step (3) described above to obtain a solid fat. The step of removing the fatty acid from the solid fraction is a so-called solid fat refining step, and, for example, the same method as in a deacidification step and/or a deodorization step which are known as refining steps for ordinary fats can be used in the refining step. Specifically, when the removal is conducted according to the deacidification step, for example, an aqueous alkaline solution is added to the above-described solid fraction (fat) heated to about 80 to 90°C in an amount which is 5 to 40% by mass excess of the free fatty acids in the fat, and the mixture is stirred. The precipitates are removed by centrifugation, so that the free fatty acids contained in the solid fraction (fat) can be removed. Meanwhile, when the removal is conducted according to the deodorization step, the solid fraction (fat) is subjected to steam distillation at a temperature of about, for example, 150 to 300°C, preferably 180 to 260°C, and more preferably 200 to 240°C. The steam distillation is, for example, conducted as follows. Specifically, the solid fraction (fat) is introduced into a distillation vessel, and steam is continuously introduced for, for example, 30 to 270 minutes, preferably 60 to 180 minutes, and more preferably 90 to 120 minutes into the distillation vessel in which the fat is kept under a reduced pressure of preferably 13 to 2700 Pa, and more preferably 130 to 1350 Pa and at the above-described temperature. As a result, the fatty acid can be removed with water. Since an alkali deacidification treatment is often omitted in refining a lauric fat, the fatty acid is preferably removed in the deodorization step, which is the final step for a fat.

If necessary, ordinarily employed fat refinement such as decolorization may be conducted independently of the refining step.

Method for Producing Solid Fat

On the basis of Steps (1) to (4) described above, a solid fat, which is the target product of the present invention, can be produced from a lauric fat serving as a raw material. It is appropriate that the solid fat has, for example, an iodine value which is lower than the iodine value of the lauric fat by about 11 or more, preferably 11.4 to 18, and more preferably 12 to 16. In other words, the method of the present invention makes it possible to lower the iodine value of the solid fat, which is the final product, by about 11 or more, preferably 11.4 to 18, and more preferably 12 to 16 from the iodine value of the lauric fat serving as a raw material. More specifically, when palm kernel oil (iodine value=14 to 22) is used as the lauric fat, it is possible to obtain a solid fat having an iodine value of preferably 7 or lower, more preferably 3.0 or higher and 6.6 or lower, and further preferably 4.0 or higher and 6.0 or lower. Likewise, when palm kernel olein (iodine value=22 to 28) is used as the lauric fat, it is possible to obtain a solid fat having an iodine value of preferably 11 or lower, more preferably 10 or lower, and further preferably 9.5 or lower. In another mode, it is preferable to obtain a solid fat having an iodine value which is, for example, 40% or lower, preferably 37% or lower, and more preferably 35% or lower of the iodine value of the lauric fat serving as the raw material.

Fractionation of Lauric Fat

By Steps (1) to (4) described above, the lauric fat serving as a raw material can be fractionated into a certain liquid oil and a certain solid fat. Specifically, the crystallization product is fractionated into a solid fraction and a liquid fraction by solid-liquid separation in Step (3), and the solid fat can be obtained by removing the fatty acid from the solid fraction in the refining step of Step (4) as described above. Meanwhile, as in the case of the solid fat, the liquid fat can also be obtained by the refining step of Step (4). Specifically, the liquid fraction is subjected to steam distillation at a temperature of about 150 to 300°C, preferably 180 to 260°C, and more preferably 200 to 240°C to remove the fatty acid from the liquid fraction. Thus, the liquid oil can be obtained. It is appropriate that the obtained liquid oil has, for example, an iodine value which is higher than the iodine value of the lauric fat by about 6 or more, preferably 7 to 10, more preferably 7.5 to 9.5, and further preferably 8 to 9. In other words, the method of the present invention makes it possible to increase the iodine value of the liquid oil, which is a final product, by about 6 or more, preferably 7 to 10, more preferably 7.5 to 9.5, and further preferably 8 to 9 from the iodine value of the lauric fat serving as the raw material. More specifically, when palm kernel oil (iodine value=14 to 22) is used as the lauric fat, it is possible to obtain a liquid oil having an iodine value of preferably 25 or higher, more preferably 25.5 or higher, and further preferably 26 or higher. Likewise, when palm kernel olein (iodine value=22 to 28) is used as the lauric fat, it is possible to obtain a liquid oil having an iodine value of preferably 30 or higher, more preferably 31 or higher, and further preferably 32 or higher. In another mode, it is preferable to obtain a liquid oil having an iodine value which is, for example, 138% or higher, preferably 140% or higher, and more preferably 142% or higher of the iodine value of the lauric fat serving as the raw material.

The fractionating method of the present invention makes it possible to achieve fractionation into a solid fat having a lower iodine value and a liquid oil having a higher iodine value than conventional methods, without altering the fraction ratio between the solid fraction and the liquid fraction.

The solid fat obtained by the method of the present invention can be used suitably as a hard butter excellent as especially a cocoa butter substitute (CBS). Especially, a solid fat mainly containing an SSS-type triglyceride having an iodine value of about 5 can be used as a cocoa butter substitute even without hydrogenation.

A chocolate product comprises a sugar component and a fat component mainly containing the above-described hard butter. The content of the hard butter in the fat component is preferably 40% by mass or higher, more preferably 60% by mass or higher, and further preferably 80% by mass or higher. The sugar component may be any, as long as the sugar component is generally used for chocolate. Examples of the sugar component include sucrose, fructose, and mixtures thereof. A sugar alcohol such as sorbitol may be used. In addition, any components contained in ordinary chocolate products may also be contained. Examples of such components include cocoa solids, emulsifier (lecithin, in general), flavor, skim milk powder, whole milk powder, and the like.

The liquid oil obtained by the method of the present invention can be used for, for example, liquid cream for beverage, ice cream, coating chocolate, spray oil for confectionery and the like, mold release oil, and the like. Note that, in the present invention, a fat obtained from the solid fraction which is obtained by the solid-liquid separation (fractionation) of a lauric fat is referred to as a solid fat, and a fat obtained from the liquid fraction is referred to as a liquid oil, irrespective of the change of state of the fat due to the change in environmental temperature (for example, change from a solid to a liquid or from a liquid to a solid).

Next, the present invention will be described in detail based on Examples.

[Examples]

<Method for Measuring Iodine Value>

The iodine value was measured by using the A. O. C. S. testing method (Official Method Cd 1-25). Specifically, 10 mL of cyclohexane was added to 0.5 to 3 g of each sample fat, which was then dissolved therein. Then, 25 mL of the Wijs solution was added thereto, and the mixture was left in a dark place for 1 hour. After that, the reaction was stopped by adding 20 mL of a 10 g/100 mL potassium iodide solution and 100 mL of water, and then the mixture was titrated with 0.1 N sodium thiosulfate to determine the amount of iodine added to the fat. The method for conversion to the iodine value is based on the following formula.

$$\text{Iodine Value} = (A-B) \times F \times 1.269/C$$

A: The amount (ml) of the 0.1 mol/L sodium thiosulfate standard solution used in a blank test of the above-described measuring test in which no sample fat was added.
B: The amount (ml) of the 0.1 mol/L sodium thiosulfate standard solution used in the above-described measuring test.
F: The correction factor of the 0.1 mol/L sodium thiosulfate (1.005 in the examples).
C: The amount (g) of the sample fat used.

<Fractionation of Unrefined Palm Kernel Oil>

Comparative Example 1

By using a constant-temperature water bath at 60°C, 500.0 g of unrefined palm kernel oil (iodine value: 18.0) was heated at 60°C for 1 hour to completely melt the unrefined palm kernel oil. The molten fat was placed in a polypropylene container, and cooled and solidified by being allowed to stand still in a constant-temperature water bath at 20°C for 12 hours for crystallization of a cake.

The obtained cake was introduced into a juicer (manufactured by SANYO, Model: SM-R21), and intermittently crushed at 25°C, until the cake became flowable. Then, solid-liquid separation was conducted by pressure filtration (pressing pressure: 15.3 kgf/cm$^2$) also at 25°C to obtain a solid fraction (solid fat) and a liquid fraction (liquid oil). Although no fatty acid was added in Comparative Example 1, a deodorization treatment was conducted by way of precaution. The deodorization treatment was conducted by introducing the obtained solid fraction and the obtained liquid fraction into separate distillation vessels, and introducing steam into the distillation vessels under a reduced pressure of 2 torr (267 Pa) at 230°C for 90 minutes. Fatty acids were removed by this deodorization treatment to obtain a refined solid fat and a refined liquid oil. Table 1 shows the results.

Comparative Example 2

By using a constant-temperature water bath at 60°C, 150 g of the same palm kernel oil as in Comparative Example 1 was heated at 60°C for 1 hour to completely melt the palm kernel fat. The molten fat was placed in a glass crystallization flask, and 600 g of acetone was added followed by mixing. Then, the mixture was cooled in a constant-temperature water bath at 0°C with stirring for 2 hours to obtain a slurry.

The obtained slurry was subjected to solid-liquid separation by vacuum filtration using a water aspirator (Handy Aspirator WP-51 manufactured by Yamato Scientific Co., Ltd.). During the vacuum filtration, the solid fraction was washed with 300 g of additional acetone, to conduct an operation for removing the liquid fraction remaining on the surfaces of the crystals. Acetone was completely removed from the obtained solid fraction and liquid fraction by a heating treatment under reduced pressure. Although no fatty acid was added in Comparative Example 2, fatty acids were removed by conducting the same deodorization treatment as in Comparative Example 1 on each of the obtained solid fraction and liquid fraction to obtain a refined solid fat and a refined liquid oil, respectively. Table 1 shows the results.

Comparative Example 3

A mixture of 450.0 g of the same palm kernel oil as in Comparative Example 1 and 50.0 g of lauric acid (manufactured by Wako Pure Chemical Industries, Ltd.) was prepared, and heated at 60°C for 1 hour by using a constant-temperature water bath at 60°C to completely melt the palm kernel fat and lauric acid. The hot melt was placed in a polypropylene container, and cooled and solidified by being allowed to stand still in a constant-temperature water bath at 18°C for 12 hours for crystallization of a cake. The subsequent operations were conducted in the same manner as in Comparative Example 1 to remove fatty acids and obtain a refined solid fat and a refined liquid oil. Table 1 shows the results.

Example 1

A mixture of 450.0 g the same palm kernel oil as in Comparative Example 1 and 50.0 g of myristic acid (manufactured by Wako Pure Chemical Industries, Ltd.) was prepared, and heated at 60°C for 1 hour by using a constant-temperature water bath at 60°C, to completely melt the palm kernel fat and myristic acid. The hot melt was placed in a polypropylene container, and cooled and solidified by being allowed to stand still in a constant-temperature water bath at 20°C for 12 hours for crystallization of a cake. The subsequent operations were conducted in the same manner as in Comparative Example 1 to remove fatty acids and obtain a refined solid fat and a refined liquid oil. Table 1 shows the results.

Example 2

A mixture of 475.0 g of the same palm kernel oil as in Comparative Example 1 and 25.0 g of palmitic acid (manufactured by Wako Pure Chemical Industries, Ltd.) was prepared, and heated at 60°C for 1.5 hours by using a constant-temperature water bath at 60°C to completely melt the palm kernel fat and palmitic acid. The hot melt was placed in a polypropylene container, and cooled and solidified by being allowed to stand still in a constant-temperature water bath at 21°C for 12 hours for crystallization of a cake. The subsequent operations were conducted in the same manner as in Comparative Example 1 to remove fatty acids and obtain a refined solid fat and a refined liquid oil. Table 1 shows the results.

Example 3

A mixture of 487.5 g of the same palm kernel oil as in Comparative Example 1 and 12.5 g of stearic acid (manufactured by Wako Pure Chemical Industries, Ltd.) was prepared, and heated at 60°C for 1. 5 hours by using a constant-temperature water bath at 60°C to completely melt the palm kernel fat and stearic acid. The hot melt was placed in a polypropylene container, and cooled and solidified by being allowed to stand still in a constant-temperature water bath at 21°C for 12 hours for crystallization of a cake. The subsequent operations were conducted in the same manner as in Comparative Example 1 to remove fatty acids and obtain a refined solid fat and a refined liquid oil. Table 1 shows the results.

Example 4

A mixture of 487.5 g of the same palm kernel oil as in Comparative Example 1 and 12.5 g of behenic acid (manufactured by Wako Pure Chemical Industries, Ltd.) was prepared, and heated at 60°C for 2 hours by using a constant-temperature water bath at 60°C to completely melt the palm kernel fat and behenic acid. The hot melt was placed in a polypropylene container, and cooled and solidified by being allowed to stand still in a constant-temperature water bath at 21°C for 12 hours for crystallization of a cake. The subsequent operations were conducted in the same manner as in Comparative Example 1 to remove fatty acids and obtain a refined solid fat and a refined liquid oil. Table 1 shows the results.

In Tables 1 to 3 shown below, the amount of each fatty acid added is expressed in terms of the percentage by mass of the fatty acid added, where the total mass of the raw material fat and the fatty acid added is taken as 100% by mass. In addition, in Tables 1 to 3, the percentage by mass of each of the solid fraction and the liquid fraction represents the percentage by mass of the solid fraction or the liquid fraction, where the total mass of the solid fraction and the liquid fraction before the removal of the fatty acid (before the refinement) is taken as 100% by mass.

Table 1

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Raw material fat | Unrefined palm kernel oil | | | | | | |
| Type of fatty acid added | None | | Lauric acid | Myristic acid | Palmitic acid | Stearic acid | Behenic acid |
| Amount of fatty acid added | | | 10.0% | 10.0% | 5.0% | 2.5% | 2.5% |
| Crystallization temperature | 20°C | 0°C (solvent crystallization) | 18°C | 20°C | 21°C | 21°C | 21°C |
| Solid fraction (% by mass) | 40.7 | 42.4 | 36.9 | 41.1 | 39.9 | 40.2 | 42.3 |
| Liquid fraction (% by mass) | 59.4 | 57.5 | 63.1 | 58.9 | 60.1 | 59.8 | 57.7 |
| Iodine value of solid fat | 7.7 | 7.7 | 7.7 | 6.5 | 5.7 | 5.6 | 6.6 |
| [Iodine value of raw material fat]-[Iodine value of solid fat] | 10.3 | 10.3 | 10.3 | 11.5 | 12.3 | 12.4 | 11.4 |
| [Iodine value of solid fat]/[Iodine value of raw material fat]×100(%) | 42.8% | 42.8% | 42.8% | 36.1% | 36.1% | 31.7% | 36.7% |
| Iodine value of liquid oil | 24.5 | 24.8 | 24.0 | 26.0 | 26.2 | 26.3 | 26.4 |
| [Iodine value of liquid oil]-[Iodine value of raw material fat] | 6.5 | 6.8 | 6.0 | 8.0 | 8.2 | 8.3 | 8.4 |
| [Iodine value of liquid oil]/[Iodine value of raw material fat]×100(%) | 136.1% | 137.8% | 133.3% | 145.6% | 146.7% | 146.1% | 146.7% |

<Fractionation of Refined Palm Kernel Oil>

Comparative Example 3

Refined palm kernel oil (500.0 g, iodine value: 18.0) was completely melted at 60°C. The molten fat was placed in a polypropylene container, and cooled and solidified by being allowed to stand still in a constant-temperature water bath at 21°C for 12 hours for crystallization of a cake. The subsequent operations were conducted in the same manner as in Comparative Example 1 to remove fatty acids and obtain a refined solid fat and a refined liquid oil. Table 2 shows the results.

Example 5

A mixture of 498.0 g of the same palm kernel oil as in Comparative Example 3 and 2.0 g of stearic acid (manufactured by Wako Pure Chemical Industries, Ltd.) was prepared, and completely melted at 60°C. The hot melt was placed in a polypropylene container, and cooled and solidified by being allowed to stand still in a constant-temperature water bath at 22°C for 12 hours for crystallization of a cake. The subsequent operations were conducted in the same manner as in Comparative Example 3 to remove fatty acids and obtain a refined solid fat and a refined liquid oil. Table 2 shows the results.

Table 2

| | Comp. Ex. 3 | Example 5 |
|---|---|---|
| Raw material fat | Refined palm kernel oil | |

(continued)

| | Comp. Ex. 3 | Example 5 |
|---|---|---|
| Type of fatty acid added | None | Stearic acid |
| Amount of fatty acid added | | 2.0% |
| Crystallization temperature | 21°C | 22°C |
| Solid fraction (% by mass) | 53.7 | 36.8 |
| Liquid fraction (% by mass) | 46.3 | 63.2 |
| Iodine value of solid fat | 9.3 | 5.7 |
| [Iodine value of raw material fat]-[Iodine value of solid fat] | 8.7 | 12.3 |
| [Iodine value of solid fat]/[Iodine value of raw material fat]$\times$100(%) | 51.7% | 31.7% |
| Iodine value of liquid oil | 24.9 | 25.2 |
| [Iodine value of liquid oil] - [Iodine value of raw material fat] | 6.9 | 7.2 |
| [Iodine value of liquid oil] / [Iodine value of raw material fat]$\times$100(%) | 138.3% | 140% |

<Fractionation of Refined Palm Kernel Olein>

Comparative Example 4

Unrefined palm kernel olein (500.0 g, iodine value: 24.2) was completely melted at 60°C. The molten fat was placed in a polypropylene container, and cooled and solidified by being allowed to stand still in a constant-temperature water bath at 15°C for 12 hours for crystallization of a cake. The subsequent operations were conducted in the same manner as in Comparative Example 1 to remove fatty acids and obtain a refined solid fat and a refined liquid oil. Table 3 shows the results.

Example 6

A mixture of 487.5 g of the same palm kernel olein as in Comparative Example 4 and 12.5 g of stearic acid (manufactured by Wako Pure Chemical Industries, Ltd.) was prepared and completely melted at 60°C. The hot melt was placed in a polypropylene container, and cooled and solidified by being allowed to stand still in a constant-temperature water bath at 15°C for 12 hours for crystallization of a cake. The subsequent operations were conducted in the same manner as in Comparative Example 1 to remove fatty acids and obtain a refined solid fat and a refined liquid oil. Table 3 shows the results.

Table 3

| | Comp. Ex. 4 | Example 6 |
|---|---|---|
| Raw material fat | Unrefined palm kernel olein | |
| Type of fatty acid added | None | Stearic acid |
| Amount of fatty acid added | | 2.5% |
| Crystallization temperature | 15°C | 15°C |
| Solid fraction (% by mass) | 35.7 | 35.2 |
| Liquid fraction (% by mass) | 64.3 | 64.8 |
| Iodine value of solid fat | 11.9 | 9.2 |
| [Iodine value of raw material fat]-[Iodine value of solid fat] | 12.3 | 15 |
| [Iodine value of solid fat]/[Iodine value of raw material fat]$\times$100(%) | 49.2% | 38.0% |
| Iodine value of liquid oil | 28.4 | 32.3 |
| [Iodine value of liquid oil] - [Iodine value of raw material fat] | 4.2 | 8.1 |

(continued)

| | Comp. Ex. 4 | Example 6 |
|---|---|---|
| [Iodine value of liquid oil]/[Iodine value of raw material fat]×100(%) | 117.4% | 133.5% |

**Claims**

1.  A method for producing a solid fat, comprising the steps of:

    (1) mixing and melting under heating a lauric fat and a fatty acid having 14 to 22 carbon atoms, wherein the amount of the fatty acid is 0.5 to 15% by mass relative to the total mass of the lauric fat and the fatty acid;
    (2) cooling a hot melt obtained by the melting under heating to obtain a crystallization product;
    (3) fractionating the crystallization product into a solid fraction and a liquid fraction by solid-liquid separation; and
    (4) removing the fatty acid from the solid fraction to obtain the solid fat.

2.  The production method according to claim 1, wherein
    the lauric fat is one or two or more selected from the group consisting of, refined or unrefined, palm kernel oil, palm kernel olein, palm kernel stearin, and coconut oil; interesterified oils thereof; and mixture oils containing one or more thereof.

3.  The production method according to claim 1 or 2, wherein
    the lauric fat has an iodine value of 12 or higher.

4.  The production method according to any one of claims 1 to 3, wherein
    the fatty acid is a saturated fatty acid selected from myristic acid, palmitic acid, stearic acid, arachidic acid, and behenic acid.

5.  The production method according to any one of claims 1 to 4, wherein
    the solid fat has an iodine value which is lower by 11 or more than the iodine value of the lauric fat.

6.  The production method according to any one of claims 1 to 5, wherein
    the solid-liquid separation in step (3) is conducted by pressure filtration.

7.  The production method according to any one of claims 1 to 6, wherein
    the removal of the fatty acid in step (4) is conducted by steam distillation at 150 to 300°C.

8.  A method for fractionating a lauric fat into a solid fat having an iodine value which is lower by 11 or more than the iodine value of the lauric fat and a liquid oil having an iodine value which is higher by 6 or more than the iodine value of the lauric fat, the method comprising the steps of:

    (1) mixing and melting under heating the lauric fat and a fatty acid having 14 to 22 carbon atoms, wherein the amount of the fatty acid is 0.5 to 15% by mass relative to the total mass of the lauric fat and the fatty acid;
    (2) cooling a hot melt obtained by the melting under heating to obtain a crystallization product;
    (3) fractionating the crystallization product into a solid fraction and a liquid fraction by solid-liquid separation; and
    (4) removing the fatty acid from the solid fraction to obtain the solid fat, and removing the fatty acid from the liquid fraction to obtain the liquid oil.

## INTERNATIONAL SEARCH REPORT

International application No.

PCT/JP2014/050072

A.  CLASSIFICATION OF SUBJECT MATTER
*C11B15/00*(2006.01)i, *A23D9/00*(2006.01)i, *A23D9/02*(2006.01)i, *A23G1/00*
(2006.01)i, *A23G1/30*(2006.01)i, *C11B3/12*(2006.01)i, *C11B3/16*(2006.01)i,
*C11B7/00*(2006.01)i
According to International Patent Classification (IPC) or to both national classification and IPC

B.  FIELDS SEARCHED

Minimum documentation searched (classification system followed by classification symbols)
C11B1/00-C11B15/00, C11C1/00-C11C5/02, A61P1/00-A61P43/00,
A23D7/00-A23D9/06, A23G1/00-A23G9/36

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)
JSTPlus(JDreamIII), JST7580(JDreamIII)

C.  DOCUMENTS CONSIDERED TO BE RELEVANT

| Category* | Citation of document, with indication, where appropriate, of the relevant passages | Relevant to claim No. |
|---|---|---|
| A | JP 2010-47634 A  (Fuji Oil Co., Ltd.),<br>04 March 2010 (04.03.2010),<br>(Family: none) | 1-8 |
| A | JP 2012-188584 A  (ADEKA Corp.),<br>04 October 2012 (04.10.2012),<br>(Family: none) | 1-8 |
| A | WO 2012/086565 A1  (Fuji Oil Co., Ltd.),<br>28 June 2012 (28.06.2012),<br>& US 2013/0274495 A1    & EP 2657327 A1 | 1-8 |
| A | WO 2010/101289 A1  (The Nisshin Oillio Group, Ltd.),<br>10 September 2010 (10.09.2010),<br>& JP 2010-209147 A     & US 2011/0318453 A1<br>& EP 2404986 A1        & CN 102421883 A | 1-8 |

☒   Further documents are listed in the continuation of Box C.      ☐   See patent family annex.

| | | |
|---|---|---|
| *  | Special categories of cited documents: | "T" | later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search<br>    08 April, 2014 (08.04.14) | Date of mailing of the international search report<br>    22 April, 2014 (22.04.14) |
|---|---|
| Name and mailing address of the ISA/<br>    Japanese Patent Office | Authorized officer |
| Facsimile No. | Telephone No. |

Form PCT/ISA/210 (second sheet) (July 2009)

12

**INTERNATIONAL SEARCH REPORT**

| International application No. |
| --- |
| PCT/JP2014/050072 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2008/053838 A1 (Sakamoto Yakuhin Kogyo Co., Ltd.), 08 May 2008 (08.05.2008), (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI1180776 B

- JP HEI11502893 B

**Non-patent literature cited in the description**

- **G. CALLIAUW et al.** Production of Cocoa Butter Substitutes via Two-stage Static Fractionation of Palm kernel Oil. *JAOCS,* 2005, vol. 82 (11), 783-789